# EUROPÄISCHE PATENTANMELDUNG

(11) **EP 2 366 578 A1**
(43) Veröffentlichungstag der Anmeldung: **21.09.2011**
(21) Anmeldenummer: 11002230.8
(22) Anmeldetag: 17.03.2011
(51) Int. Cl.: B60K 37/06, G07C 5/08

(54) **Informationseinrichtung**

(30) Priorität: 17.03.2010 DE 202010003772 U
(71) Anmelder: Miorin, Martin, 87437 Kempten (DE)
(72) Erfinder: Miorin, Martin, 87437 Kempten (DE)
(74) Vertreter: Fiener, Josef

(57) **Zusammenfassung**

Zur einfachen Überwachung der Verbrauchskosten für Kraftstoff bzw. elektrische Energie wird bei einer Informationseinrichtung für ein Kraftfahrzeug mit wenigstens einer Eingabeeinheit (3, 4) und einer Anzeige (5) des aktuellen Kraftstoffverbrauchs, insbesondere im Bereich der Armaturentafel bzw. im Blickfeld des Fahrers vorgeschlagen, dass an der Eingabeeinheit (3, 4) die aktuellen Kraftstoffpreise in Landeswährung (€/l oder 6/kwh) abspeicherbar sind und während bzw. nach der Fahrt an der Anzeige (5) der Fahrtpreis angezeigt ist. Die Informationseinrichtung eignet sich insbesondere auch für Hybrid- oder Elektrofahrzeuge, da die Eingabe des elektrischen Grundpreises (€/kWh) jeweils für einen Tarifzeitraum in einfacher Weise erfolgen kann.

## Beschreibung

Die Erfindung betrifft eine Informationseinrichtung für ein Kraftfahrzeug gemäss den oberbegrifflichen Merkmalen des Anspruches 1.

Eine derartige Informationseinrichtung für ein Kraftfahrzeug ist z. B. aus der DE-A-38 42 414 bekannt. Die dort beschriebene Informationseinrichtung für ein Kraftfahrzeug weist eine Eingabeeinheit, einen Monitor und eine Steuereinheit zur Steuerung von im Kraftfahrzeug vorgesehenen elektrischen Geräten auf. Die Steuereinheit dient dabei zur Steuerung von Einstellparametern, z. B. der Eingabe von Daten für ein Navigationssystem. Eine ähnliche Vorrichtung, insbesondere als Navigationssystem ist aus der DE 197 00 515 A1 bekannt. Aus der DE 196 05 458 C1 ist weiterhin ein Verfahren zum Auswählen einer Fahrstrecke entsprechend dem Kraftstoffverbrauch bekannt, wobei die von einem Navigationssystem bereitgestellten Höheninformationen für die Berechnung von verschiedenen Routen herangezogen werden. Die in manchen Fahrzeugen eingebauten "Verbrauchsmesser" zeigen meist nur einen grünen und roten Bereich für günstigen oder überhöhten Verbrauch an, so dass der Informationsgehalt für den Fahrer relativ gering bleibt.

Demzufolge liegt der Erfindung die Aufgabe zugrunde, eine Informationseinrichtung für ein Kraftfahrzeug zu schaffen, das dem Fahrer eine einfache, sichere Überwachung der effektiven Verbrauchskosten für Kraftstoff und/oder elektrische Energie erlaubt.

Diese Aufgabe wird gelöst durch eine Informationseinrichtung mit den Merkmalen des Anspruches 1.

Durch die Eingabe des aktuellen Kraftstoffpreises (wobei auch die Ladekosten bei elektrischer Energie, insbesondere bei Elektro- oder Hybridfahrzeugen umfasst sind) kann der Fahrtpreis während bzw. nach der Fahrt exakt auf Euro/Cent oder einer anderen Währung abgelesen werden, um beispielsweise ohne Berechnung direkt in ein Fahrten- oder Haushaltsbuch übertragen zu werden. Somit hat der Fahrer einen genauen Überblick über die jeweiligen Fahrtkosten in Abhängigkeit von der jeweils gewählten Fahrtroute, Verkehrssituation, persönlichen Fahrbedingungen usw.. Auch bei Fahrgemeinschaften kann die Abrechnung vereinfacht werden, indem die angezeigten Fahrtkosten von z. B. € 1,50 durch die Anzahl der Passagiere geteilt werden.

Bevorzugt ist die Informationseinrichtung bei der Erstausrüstung in das sog. Motor-Managementsystem integriert oder mit diesem gekoppelt, da die zur Verbrauchsmessung erforderlichen Daten dort verfügbar sind, z. B. durch Multiplikation der Einspritzvorgänge mit der jeweiligen Einspritzmenge bei Benzin- oder Dieseleinspritzanlagen. Ebenso werden die Füllstände des Tanks, der Batterie bzw. Akkus oder ggf. auch Behälter von Brennstoffzellen miterfasst, die z. B. vor drei Wochen noch zu einem höheren Liter/kWh-Preis betankt wurden und dann vor einer Woche zu einem niedrigeren Preis. Der Fahrer muss somit nicht eine umständliche Restmengenberechnung durchführen, so dass er/sie günstige Nachfüllpreise bei der Fahrt einfacher nutzen kann. Zudem eignet sich diese Informationseinrichtung auch zur Nachrüstung. Der Monitor bzw. Bildschirm der Informationseinrichtung ist hierbei beispielsweise auf dem Armaturenbrett ausgebildet. Somit ist das Informationsmodul in unmittelbarer Reichweite des Fahrers knapp oberhalb des Lenkradkranzes angeordnet, ohne hierbei die Lenkbewegung zu stören. Dabei kann das Informationsmodul auch mit einem Navigationssystem oder einem PDA gekoppelt oder in dieses integriert sein. Letzteres bietet sich besonders dann an, wenn dieses für die bargeldlose Bezahlung genutzt wird, so dass dann die Tankmenge und entsprechender Zahlbetrag bzw. Literpreis ebenfalls als Datensatz vorhanden sind. Durch die direkte Anzeige der Fahrtkosten ergibt sich insbesondere auch eine psychologische Lenkung zu einem sparsamen, verbrauchsbewussten Fahrverhalten.

Weitere vorteilhafte Ausgestaltungen sind Gegenstand der Unteransprüche.

Nachfolgend wird ein Ausführungsbeispiel der vorgeschlagenen Informationseinrichtung für ein Kraftfahrzeug anhand der Zeichnungen näher erläutert und beschrieben. Hierbei zeigen:
Fig. 1 eine schematische Seitenansicht mit der Anbringung der Informationseinrichtung auf einer Armaturentafel eines Kraftfahrzeuges; und
Fig. 2 eine Vorderansicht auf die Informationseinrichtung aus der Blickrichtung eines Fahrers des Kraftfahrzeuges.

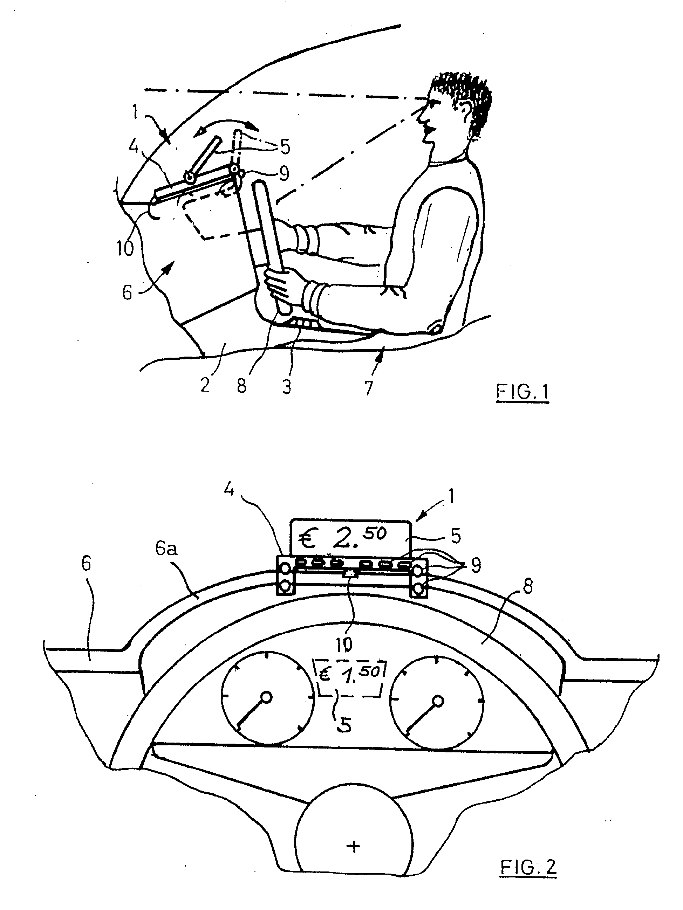

In Fig. 1 ist in schematischer Seitenansicht eine Informationseinrichtung 1 für ein Kraftfahrzeug 2 dargestellt, das lediglich im Fahrerbereich angedeutet ist. Die Informationseinrichtung 1 umfasst wenigstens eine Eingabeeinheit 3, die hier im Griffbereich zwischen dem Fahrer 7 und dem Lenkrad 8, beispielsweise werkseitig auf einer Mittelkonsole des Kraftfahrzeuges 2 angeordnet ist und/oder eine nachrüstbare, separate Eingabeeinheit 4. An dieser Eingabeeinheit 3 bzw. 4 kann neben der Eingabe der aktuellen Kraftstoffpreise in der jeweiligen Landeswährung (Euro pro Liter bzw. kWh) beispielsweise auch das Fahrziel einprogrammiert werden, so dass bei einem Navigationssystem als Datenspeicher die entsprechenden Richtungshinweise, verbleibende Fahrstrecke bis zum Ziel etc. im Bereich der Armaturentafel 6 angezeigt werden. Hierzu ist bei der Nachrüstung ein auf der Armaturentafel 6 aufgesetzter Monitor 5 vorgesehen, der bei der Erstausrüstung im der Armaturenbrett integriert sein kann (vgl. Fig. 2 zwischen Tacho und Drehzahlmesser).

Es ist auch denkbar, dass zwei Monitore 5, einer für den Benzin/Dieselpreis und einer für die "nachgefüllte" elektrische Energie, vorgesehen sind, insbesondere bei Hybridfahrzeugen. Bei der Nachrüstlösung kann die dem Fahrer 7 bzw. Lenkradkranz 8 zugewandte Kante 6a der Armaturentafel 6 zur Befestigung des Monitors 5 mit einem Schnellverschluss 10 dienen. Die Eingabe des elektrischen Grundpreises in €/kWh ist hierbei besonders bequem, da dieser in der Regel für ein Kalenderjahr vertraglich fixiert ist und somit für diesen Tarifzeitraum nur noch einmal eingegeben werden muss. Damit ist dieses System insbesondere für Hydrid-Fahrzeuge, auch mit einem sog. Range Extender geeignet oder für reine Elektro-Fahrzeuge.

In Fig. 2 ist die Informationseinrichtung 1 so dargestellt, wie sie der Fahrer 7 wahrnimmt. Wie ersichtlich, ist der obere Monitor 5 in aufgeklappter Betriebsstellung bevorzugt mittig über der höchsten Stelle des Lenkradkranzes 8 angeordnet. Diese Anordnung bietet zudem den Vorteil, dass am Umfang des Monitors 5, hier an der unteren Kante oder an dem zum Fahrer 7 hin gewandten Rand eine Vielzahl von Bedienknöpfen 9 angeordnet werden kann. Hierdurch kann die Informationseinrichtung 1 alternativ oder ergänzend zu der Eingabeeinheit 3 auf dem Mitteltunnel bedient werden, insbesondere die aktuellen Kraftstoffpreise nach Beendigung des Tank- bzw. Ladevorganges mit einer Menüführung eingetippt werden. Die können jedoch auch drahtlos, z. B. über RFID an das Fahrzeug übermittelt werden oder beim bargeldlosen Bezahlvorgang eingelesen werden. Dabei wird auch die Rest-Füllmenge des Tanks oder Energiespeichers mit dem damaligen Füllpreis berücksichtigt, zumal die Restmenge im Fahrzeugcomputer zur Reichweiten- oder Verbrauchsberechnung usw. ohnehin hinterlegt ist. Von besonderem Vorteil ist die Anzeige der aktuellen Stromkosten parallel zu den Benzin-/Dieselkosten auf zwei Monitoren 5, wie hier in Fig. 2 dargestellt, da hierdurch der Anteil des Elektrobetriebs gesteigert werden kann. Dies gilt insbesondere, wenn das Fahrzeug beim Parken direkt über Solarzellen aufgeladen werden kann, so dass die Batterien/Akkus jeweils vollgeladen werden können, ohne auf den Verbrennungsmotor zurückzugreifen. Anstatt zwei getrennter Monitore können die beiden Anzeigen auch in einem Monitor 5 gruppiert sein oder das Display wechselweise den Preis in € des Benzin/Dieselbetriebs bzw. des Akku-/Batteriebetriebs anzeigen oder zwei Anzeigefelder neben- oder übereinander besitzen.

## Patentansprüche

1. Informationseinrichtung für ein Kraftfahrzeug, mit wenigstens einer Eingabeeinheit und einer Anzeige des aktuellen Kraftstoffverbrauchs, insbesondere im Bereich der Armaturentafel bzw. im Blickfeld des Fahrers, **dadurch gekennzeichnet, dass** an der Eingabeeinheit (3, 4) die aktuellen Kraftstoffpreise in Landeswährung (€/I oder €/kWh) abspeicherbar sind und während bzw. nach der Fahrt an der Anzeige (5) der Fahrtpreis angezeigt ist.

2. Informationseinrichtung nach Anspruch 1, **dadurch gekennzeichnet, dass** die Eingabe des elektrischen Grundpreises (€/kWh) jeweils für einen Tarifzeitraum erfolgt.

3. Informationseinrichtung nach Anspruch 1 oder 2, **dadurch gekennzeichnet, dass** die Eingabeeinheit (3, 4) und/oder Anzeige (5) für Hybridfahrzeuge doppelt (Preis für Benzin-/Dieselbetrieb bzw. elektrischen Betrieb) ausgebildet ist.

4. Informationseinrichtung nach Anspruch 1 oder 2, **dadurch gekennzeichnet, dass** die Anzeige (5) des Fahrpreises permanent erfolgt.

5. Informationseinrichtung nach einem der Ansprüche 1 bis 4, **dadurch gekennzeichnet, dass** an der Anzeige (5) Bedienknöpfe (9) zur Eingabe der Kraftstoffpreise angeordnet sind.

6. Informationseinrichtung nach einem der Ansprüche 1 bis 5, **dadurch gekennzeichnet, dass** die Anzeige (5) mit einem Reichweitenrechner, insbesondere eines Navigationssystems gekoppelt ist.

7. Informationseinrichtung nach einem der Ansprüche 1 bis 6, **dadurch gekennzeichnet, dass** die Anzeige (5) in ein Motor-Managementsystem integriert oder mit diesem gekoppelt ist.

8. Informationseinrichtung nach einem der Ansprüche 1 bis 7, **dadurch gekennzeichnet, dass** die Kraftstoffpreise drahtlos an der Tankstelle oder einer Stromzapfstelle in die Eingabeeinheit (4) einlesbar sind, insbesondere über RFID.

9. Informationseinrichtung nach Anspruch 8, **dadurch gekennzeichnet, dass** der Einlesevorgang zusammen mit dem Bezahlvorgang erfolgt.

10. Informationseinrichtung nach einem der Ansprüche 1 bis 9, **dadurch gekennzeichnet, dass** die Eingabeeinheit (4) wenigstens einen Mikrocomputer zur Berechnung des Fahrtpreises unter Berücksichtigung der Energie-Restmenge im Tank/Akku aufweist.
